# EUROPEAN PATENT SPECIFICATION

(11) **EP 0 907 618 B1**
(45) Date of publication and mention of the grant of the patent: **11.08.2004**
(21) Application number: 97931007.5
(22) Date of filing: 04.06.1997
(51) Int. Cl.: C03B 37/027, C03B 37/012, G02B 6/10

(54) **METHOD OF MAKING POLARIZATION RETAINING FIBER**
VERFAHREN ZUM HERSTELLEN VON POLARISATIONSERHALTENDEN FASERN
PROCEDE DE FABRICATION DE FIBRES A MAINTIEN DE POLARISATION

(30) Priority: 17.06.1996 US 19597 P
(43) Date of publication of application: 14.04.1999
(73) Proprietor: CORNING INCORPORATED, Corning, N.Y. 14831 (US)
(72) Inventor: CHRISTOFF, William, R., Elmira, NY 14903 (US); DOUD, Paul, D., Lawrenceville, PA 16969 (US); GILLILAND, John, W., Horseheads, NY 14845 (US)
(74) Representative: Boon, Graham Anthony
(86) International application number: PCT/US1997/009176
(87) International publication number: WO 1997/048648

(56) References cited:
- US-A- 4 360 371
- US-A- 5 149 349
- US-A- 5 482 525
- PATENT ABSTRACTS OF JAPAN vol. 8, no. 105, 17 May 1984 (1984-05-17) & JP 59 015905 A (HITACHI CABLE CO LTD), 27 January 1984 (1984-01-27)
- PATENT ABSTRACTS OF JAPAN vol. 9, no. 236, 21 September 1985 (1985-09-21) & JP 60 090306 A (HITACHI CABLE CO LTD), 21 May 1985 (1985-05-21)
- APPL. PHYS. LETT., 33(9), November 1978, RAMASWAMY et al., "Single Polarization Optical Fibers: Exposed Cladding Technique", pages 814-816, XP001092776

## Description

### Background of the Invention

This invention relates to the fabrication of polarization retaining single-mode (PRSM) optical fibers and more particularly to the fabrication of preforms from which fibers having elliptically-shaped cores can be drawn.

In many applications of single-mode optical fibers, eg. gyroscopes, sensors and the like, it is important that the propagating optical signal retain the polarization characteristics of the input light in the presence of external depolarizing perturbations. This requires the waveguide to have an azimuthal asymmetry of the refractive index profile.

One of the first techniques employed for improving the polarization performance of single-mode fibers was to distort the symmetry of the core. A method of making this kind of PRSM fiber is disclosed in U.S. patent 5,149,349. A PRSM optical fiber is formed by drawing a fiber from a draw blank having a glass core surrounded by cladding glass containing apertures that are diametrically opposed with respect to the core. The fiber is drawn at such a rate and temperature that the apertures close and the core becomes elliptically-shaped. In a preferred method of making the draw blank, longitudinal grooves are formed on diametrically opposed sides of a cylindrically-shaped core preform in which the glass core is surrounded by the cladding glass. Glass particles are deposited on the outer surface of a glass tube, and the core preform is inserted into the tube. The resultant assembly is heated to sinter or consolidate the particles, whereby the tube is collapsed and fused to the grooved core preform to form an assembly having longitudinal apertures on opposite sides of the core.

When the aperture-containing blank is drawn to form the PRSM fiber, the apertures close due to surface tension and the flow of molten glass into the apertures. This flow causes the round core of the blank to become elongated in the direction of the apertures. The core aspect ratio of the elliptically-shaped core is primarily determined by the spacing between the core and the apertures. As the spacing between the core and the apertures in the draw blank decreases, the core of the resultant fiber becomes more elongated in cross-section, but the core cross-section tends to have long thin ends. If the spacing is too small, the core may break through the cladding region between core and apertures, resulting in the formation of a core the cross-section of which is flattened with undesirable flared ends. By "ends" is meant the tips of the elongated core along the major axis of the core as observed in a plane perpendicular to the fiber longitudinal axis.

### Summary of the Invention

It is therefore an object of the invention to provide a method of making PRSM optical fibers which overcomes the disadvantages of the prior art. A further object is to provide a PRSM fiber producing method which is relatively simple to practice. Yet another object is to provide a method for making elliptical core PRSM fibers having improved core cross-sectional shape.

The invention provides a method of making an optical fiber as defined in claim 1, and a method of making an optical fiber draw blank as defined in claim 7.

### Brief Description of the Drawings

Fig. 1 is a cross-sectional view of a preform from which an elliptical core PRSM fiber can be drawn.
Fig. 2 is a schematic diagram illustrating the drawing of a PRSM fiber from the preform of Fig. 1.
Fig. 3 is a cross-sectional view of a PRSM fiber produced by the present method.
Figs. 4 and 5 are diagrams showing the major axis radius and the minor axis radius of the elliptical core and its surrounding low viscosity region, respectively.
Fig. 6 illustrates the application of a coating of glass particles to a mandrel.
Fig. 7 is a graph showing the core refracative index profile.
Fig. 8 is a schematic diagram illustrating the drawing of a rod from a consolidated core glass tube.
Fig. 9 is a schematic diagram illustrating the various dimensions of a grooved -blank.
Fig. 10 is a cross-sectional view of an assembly wherein a grooved core cane is disposed in a soot-coated cladding glass tube.

### Description of the Preferred Embodiment

It is to be noted that the drawings are illustrative and symbolic of the invention, and there is no intention to indicate scale or relative proportions of the elements shown therein.

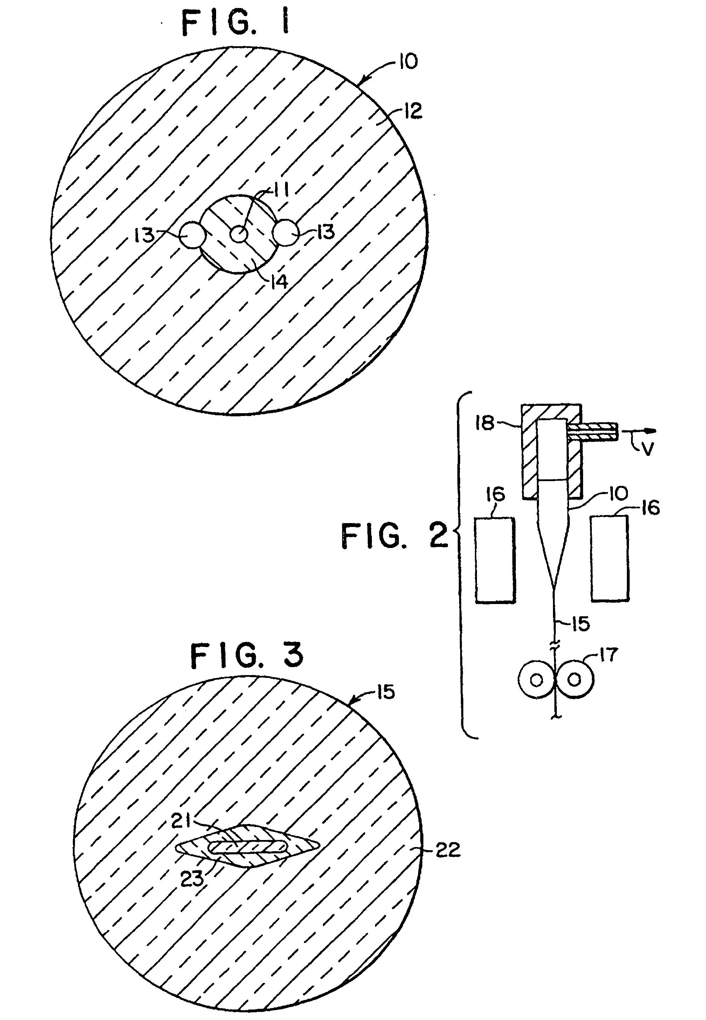

Draw blank 10 of Fig. 1, from which a PRSM fiber can be drawn, has core and cladding regions 11 and 12, respectively. The core and cladding regions may be formed of conventional materials employed in the formation of optical waveguides. The salient characteristics of these materials are that the refractive index n₁ of the core material must be greater than the refractive index n₂ of the cladding material and that both materials must exhibit low losses at the wavelength at which the waveguide is intended to be operated. By way of example only, core region 11 may consist of pure silica or silica containing one or more dopants which increase the refractive index thereof. Region 12 may consist of pure silica, silica containing a lesser amount of refractive index increasing dopant than core region 11, or silica containing one or more dopants, at least one of which is a refractive index lowering dopant such as B₂O₃ or fluorine. Although silica is a preferred base glass because it exhibits low loss at useful wavelengths, base glass materials other than silica may be employed.

In accordance with the invention a region 14 of low viscosity relative to that of cladding 12 is disposed between core 11 and apertures 13. The viscosity of low viscosity region 14 is preferably close to or slightly lower than that of core 11. This can be accomplished, for example, by forming region 14 of silica doped with appropriate amounts of one or more viscosity lowering dopants such as B₂O₃, fluorine, P₂O₅, GeO₂ and the like.

The refractive index n₃ of region 14 should be equal to or less than n₂. The refractive index of region 14 can be made to be equal to that of cladding 12 by, for example, forming region 14 of silica doped with appropriate amounts of one or more refractive index decreasing dopants such as B₂O₃ and fluorine and one or more refractive index increasing dopants such as P₂O₅, GeO₂ and the like.

The refractive index of region 14 can be made to be lower than that of cladding 12 by, for example, employing a silica cladding 12 and forming region 14 of silica doped with B₂O₃ or fluorine or by doping silica with a refractive index increasing dopant such as P₂O₅, GeO₂ and the like as well as a sufficient amount of B₂O₃ and/or fluorine to reduce the refractive index of the composite material to a value less than that of silica. Examples of elliptical core fibers having this type of refractive index profile are disclosed in U.S. patent 5,482,525.

Apertures 13 extend longitudinally through blank 10 parallel to core region 11. While apertures 13 are illustrated as being D-shaped in cross-section, the cross-sectional configuration could be crescent shaped, circular, or the like. Any shape that results in the desired cross-sectional elongation of the core during fiber draw is considered to be suitable.

Referring to Fig. 2, draw blank 10 is placed in a conventional draw furnace where tractors 17 pull fiber 15 from the bottom portion of blank 10 which is heated to draw temperature by heating elements 16. The tendency for apertures 13 to close is a function of draw rate and glass viscosity. The viscosity of the draw blank root from which the fiber is drawn depends upon furnace temperature and glass composition. If the viscosity of the heated portion of the blank is sufficiently low and the draw rate is sufficiently low, apertures 13 will naturally close during the draw process. Since the apertures more readily close if they are evacuated, draw speed can be increased by affixing a vacuum attachment 18 to the upper end of the blank.

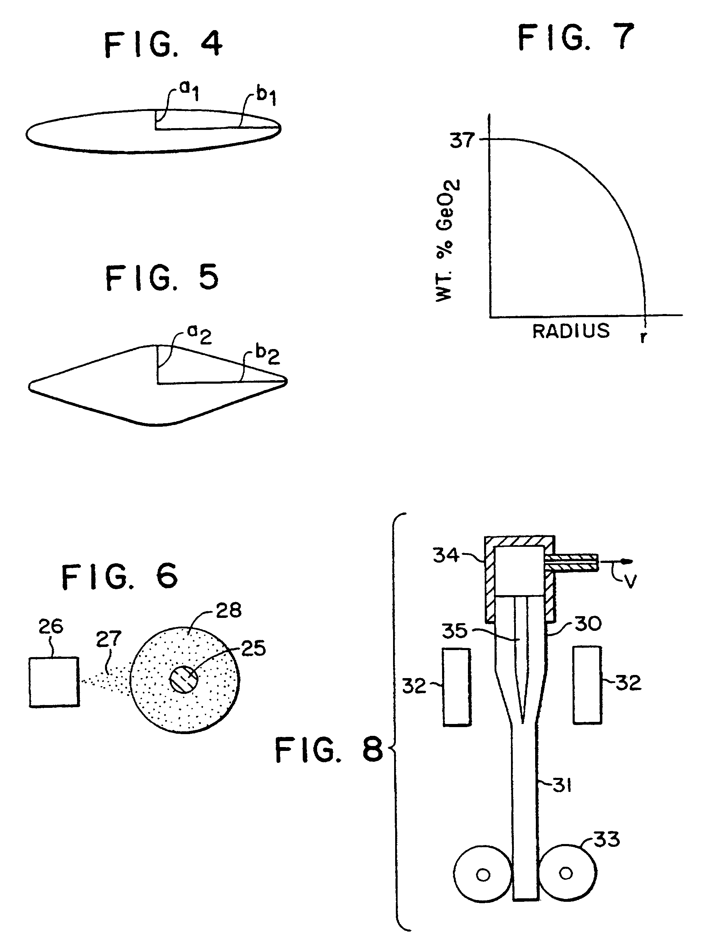

As apertures 13 close, they are replaced by the surrounding glass. When glass at smaller radii than the apertures flows radially outwardly into the apertures, core region 11 becomes elongated in cross-section. The resultant PRSM fiber 15, the cross-section of which includes cladding 22, oblong core 21 and low viscosity region 23, is shown in Fig. 3. The ellipticity or aspect ratio of the elliptical core is the ratio of its major dimension to its minor dimension in a plane perpendicular to the fiber axis (see Fig. 4). Cores of varying degrees of ellipticity can be made depending, inter alia, on the size of apertures 13 and the spacing between those apertures and the core.

In accordance with the method of this invention, the shape of elliptical core 21 is also a function of the viscosity of region 23. When the glass of draw blank 10 starts to flow, the flow of core glass toward the apertures will be less restricted by the intervening glass between core region 11 and apertures 13 than was the case when that intervening glass was silica. Thus, core region 11 can flow farther toward the apertures before they close. Since the outer cladding 12 has a relatively high viscosity, e.g. that of pure silica, the flow of that glass into the apertures is very small; thus the core glass and the low viscosity region 14 can flow more.

Consequently, the cross-sectional shape of core 21 is more bar-shaped (Fig. 4) as opposed to the usual shape with relatively pointed ends and a bulging middle. In the fiber resulting from the present process, the low viscosity region 14 assumes a cross-sectional shape 23 (Fig. 3) having ends that are more pointed than the ends of core 21 and a middle section that bulges more than the middle of the core. A comparison of Figs. 4 and 5, which are relatively accurate representations of the cross-sections of core 21 and region 23, reveals that the aspect ratio b₁/a₁ of elliptical core 21 is greater than the aspect ratio b₂/a₂ of low viscosity region 23.

Apertures 13 must be parallel to the core and uniform in cross-sectional area throughout the longitudinal axis of draw blank 10 if fiber 15 is to have uniform properties throughout its length. Any conventional technique that meets these requirements can be used for forming the apertures. UK Patent Application GB 2,192,289 teaches two techniques for forming longitudinal holes in a preform on opposite sides of the core:
(1) The holes can be drilled with a diamond drill.
(2) A core preform having opposed flattened sides is placed in the center of a glass tube, and two glass rods are placed on opposite sides of of the core preform, leaving two opposed unfilled regions between the core preform and the tube. The resultant assembly is drawn to reduce the diameter thereof and to cause the glass members to fuse together to form an article that has a solid cross-section except for two opposed axe-head shaped holes that correspond to the unfilled regions.

An elliptical core PRSM fiber was made in accordance with the method illustrated in Figs. 6-10. A cylindrical mandrel 25 (Fig. 6) was rotated and translated with respect to a flame hydrolysis burner 26 such that a stream 27 of glass particles or soot formed a porous coating 28 on the mandrel. The composition of the soot stream 27 was initially SiO₂ doped with 37 wt. % GeO₂, the concentration of GeO₂ decreasing with increasing radius as shown in Fig. 7. The coated mandrel was removed from the lathe, and the mandrel was removed from the porous preform, thereby leaving a longitudinal aperture in the porous preform. The porous preform was then dried and consolidated in accordance with the teachings of U.S. Patent No. 4,125,388. The resultant consolidated preform or core blank 30 was inserted into the draw apparatus of Fig. 8 where its tip was heated to drawing temperature by heating means 32, and vacuum connection 34 was affixed to its upper end. After the end of the preform was stretched so that its aperture 35 was either very narrow or completely closed, the aperture was evacuated through fixture 34. As the lower end of the preform was pulled downwardly, and its diameter decreased, the evacuated aperture 35 collapsed. The radius r of the resultant α-cane 31 was 6 mm. Its germania concentration profile is shown in Fig. 7.

A plurality of 90 cm sections were severed from the α-cane, and one of the sections was inserted into a lathe and coated with SiO₂ soot as described in conjunction with Fig. 6. The resultant composite preform was consolidated at 1450° C while a mixture of 94.3 volume percent helium, 1.0 volume percent chlorine and 4.7 volume percent SiF₄ flowed upwardly through the muffle. In the resultant consolidated preform the diameter of the fluorine-doped silica layer was 13.4 mm, and the core diameter was about 6.2 mm.

The consolidated preform was inserted into a lathe and coated with SiO₂ soot which was consolidated in an atmosphere of chlorine and helium to form a pure silica layer over the fluorine-doped silica layer.

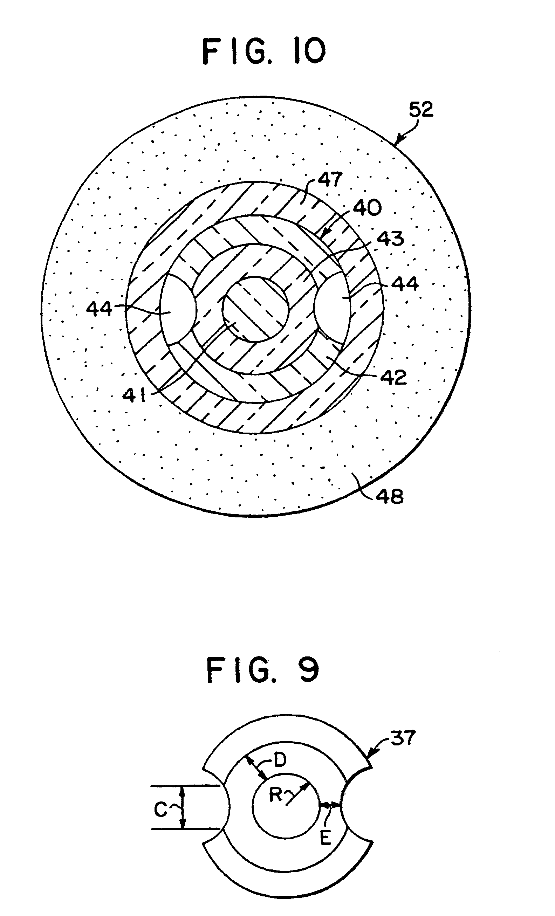

Longitudinally-extending grooves were ground through the outer silica cladding layer on opposite sides of the core such that they extended into the fluorine-doped low viscosity region. After the grinding operation, the grooved β-blank (Fig. 9) was cleaned and rinsed.

The grooved β-blank was then inserted into a conventional draw furnace of the type illustrated in Fig. 8 where it was stretched to reduce its diameter to about 7.3 mm. The resultant β-cane 40 (Fig. 10) includes core region 41, silica cladding layer 42 and low viscosity region 43. Slots 44 extend longitudinally along β-cane 40 on opposite sides of core region 41.

Silica cladding tube 47 had inside and outside diameters of 7.5 mm and 9.5 mm, respectively. An end of tube 47 was tapered inwardly and fused to a handle suitable for supporting assembly 52 in a consolidation furnace. Grooved β-cane 40 was inserted into the end of tube 47 opposite the tapered end until it contacted the tapered end. The end of tube 47 into which preform 40 was inserted was tapered inwardly and fused to a glass rod. Tube 47 was then mounted in a lathe where it was rotated and translated with respect to a soot deposition burner where particles of silica soot were deposited thereon to build up porous coating 48, thereby forming assembly 52.

Assembly 52 was lowered into a consolidation furnace where it was subjected to a drying gas mixture of chlorine and helium and then sintered to form optical fiber draw blank 10 of Fig. 1. As coating 48 consolidated, it exerted a force radially inwardly on tube 47, thereby forcing that tube inwardly against preform 40. The original cladding region 42 and tube 47 are completely fused together, and porous coating 48 has become completely sintered and fused to tube 47, these layers forming cladding 12.

The resultant draw blank was inserted into a draw furnace, where an optical fiber was then drawn from the preform.

A grooved β-blank made by the above-described process can be characterized by the dimensions C, D, E and R of Fig. 10. Five different grooved β-blanks, which were made by the above-described method, were employed to form draw blanks that were drawn into optical fibers 1 through 5, which are characterized in Table 1. In each of the grooved β-blanks the radius R of the core region was about 3.5 mm.

**Table 1**

| Fiber No. | Soot Weight | wt. % fluorine | Dimension E (mm) | Dimension C (mm) | Aspect Ratio |
|---|---|---|---|---|---|
| C1 | N/A | None | 1.73 | N/A | 5.3 |
| C2 | N/A | None | 1.80 | N/A | 5.1 |
| C3 | N/A | None | 1.98 | N/A | 5.8 |
| 1 | 160 g | 1.6 | 1.53 | 11.99 | 6.2 |
| 2 | 160 g | 1.6 | 1.53 | 11.99 | 6.3 |
| 3 | 126 g | 1.0 | 1.25 | 10.42 | 7.6 |
| 4 | 66 g | 1.0 | 0.70 | 6.14 | 8.3 |
| 5 | 62 g | 1.0 | 1.40 | 6.40 | 6.0 |

The dimension D of Fig. 9 was not measured but is related to the "soot weight" listed in Table 1. The soot weight is the weight of the silica glass particles that are deposited to form low viscosity region 43. The coating made up of those particles is then doped with fluorine and consolidated. A greater soot weight will result in a greater thickness D.

The relatively high aspect ratio of fibers 3 and 4 indicates that a relatively small dimension E is preferred.

The three comparison fibers C1, C2 and C3 of Table 1 were made by a process similar to that by which fibers 1 through 5 were made, but no low viscosity, fluorine-doped silica region 43 was employed. That is, the entire cladding from the core to the outer surface of the fiber was formed of SiO₂. The aspect ratios of fibers C1, C2 and C3 are lower than the aspect ratios of fibers 1 through 5.

In the embodiment of Fig. 1 the low viscosity region 14 extends from the core 11 and into the apertures 13. It is thought that some improvement in aspect ratio would be achieved if region 14 did not quite extend to apertures 13, but the effect on improved aspect ratio would not be as great as the improved effect achieved by the embodiment of Fig. 1.

## Claims

1. A method of making an optical fiber comprising:
forming an optical fiber draw blank (10) having a glass core (11, 41) of refractive index n₁ surrounded by a cladding glass layer (12, 42) of refractive index n₂, the blank having two apertures (13) diametrically opposed with respect to the core and spaced from the core, the apertures extending longitudinally through the blank and parallel to the core, the glass core having a viscosity at a draw temperature and the cladding glass layer having a viscosity at the draw temperature higher than the viscosity of the glass core at the draw temperature, and the draw blank having a low viscosity glass layer (14, 43) between the core and the apertures, the low viscosity glass layer having a viscosity at the draw temperature not greater than the viscosity of the glass core, and the low viscosity glass layer having a refractive index n₃,
heating a portion of the draw blank to the draw temperature, and
drawing an optical fiber (15) from the heated portion of the draw blank at such a rate that the glass core and the low viscosity glass layer flow toward the apertures and the apertures close to form a core (21) having an elliptical cross-section in which the low viscosity glass layer (23) has a major axis radius b₂, a minor axis radius a₂, and an aspect ratio b₂/a₂, and the core(21) has a major axis radius b₁, a minor axis radius a₁, and an aspect ratio b₁/a₁, wherein the aspect ratio b₁/a₁ is greater than the aspect ratio b₂/a₂.

2. A method according to claim 1, wherein, before the step of heating a portion of the draw blank, the cladding glass layer (12) is formed by fusing together an inner silica cladding layer (42) disposed around the low viscosity glass layer (43) and having a pair of longitudinal grooves (44) extending along diametrically opposed sides of the inner silica cladding layer (42), a silica cladding tube (47) disposed around the silica cladding layer (42), and an outer silica cladding layer (48) disposed around the tube (47), wherein the inner silica cladding layer (42) and the silica cladding tube (47) form the two apertures (13) about the grooves (44).

3. A method according to either of the preceding claims, wherein the two apertures (13) extend into the low viscosity glass layer (14).

4. A method according to any of the preceding claims, wherein the low viscosity glass layer (14, 43) completely surrounds the glass core (11, 41).

5. A method according to any of the preceding claims, wherein the low viscosity glass layer (14, 43) is formed of SiO₂ containing dopants selected from the group consisting of B₂O₃, fluorine, P₂O₅ and GeO₂.

6. A method according to any of the preceding claims, wherein the cladding glass region (12, 42) consists of SiO₂.

7. A method of making an optical fiber draw blank comprising the steps of:
forming a preform comprising:
a central core glass (41) having a viscosity at a draw temperature, and
a low viscosity glass layer (43) surrounding the core (41), the low viscosity glass layer (43) having a viscosity at the draw temperature not greater than the viscosity of the core glass (41) at the draw temperature; applying an inner silica cladding layer (42) around the preform;
forming a pair of longitudinal grooves (44) extending along diametrically opposed sides of the inner silica cladding layer (42);
surrounding the inner silica cladding layer (42) with a glass tube (47);
applying an outer silica cladding layer (48) around the glass tube (47) in the form of silica soot particles wherein the preform, the inner silica cladding layer, the glass tube, and the outer silica cladding layer form an assembly (52); and
heating the assembly (52) sufficiently to consolidate the silica soot particles and to fuse the inner silica cladding layer (42), the glass tube (47), and the outer cladding layer (48) together to form a cladding layer (12), thereby forming an optical fiber draw blank (10).

8. A method of making an optical fiber, which comprises making a draw blank by the method of claim 7, heating a portion of the optical fiber draw blank (10) to the draw temperature, and drawing on the heated portion of the optical fiber draw blank to form an optical fiber (15).

## Patentansprüche

1. Verfahren zur Herstellung einer optischen Faser umfassend:
Bilden eines Formlings (10) zum Ziehen einer optischen Faser, der einen Glaskern (11, 41) mit einer Brechzahl n₁ aufweist, der von einer Mantelglasschicht (12, 42) mit einer Brechzahl n₂ umgeben ist, wobei der Formling in Bezug auf den Kern und mit Zwischenraum vom Kern angeordnet zwei diametral gegenüberliegende Öffnungen (13) aufweist, wobei die Öffnungen längs durch den Formling und parallel zum Kern verlaufen, wobei der Glaskern eine Viskosität bei einer Ziehtemperatur aufweist und die Mantelglasschicht eine Viskosität bei der Ziehtemperatur aufweist, die höher als die Viskosität des Glaskerns bei der Ziehtemperatur ist und wobei der Ziehformling eine niedrig viskose Glasschicht (14, 43) zwischen dem Kern und den Öffnungen aufweist, wobei die niedrig viskose Glasschicht eine Viskosität bei der Ziehtemperatur aufweist, die nicht größer als die Viskosität des Glaskerns ist und wobei die niedrig viskose Glasschicht eine Brechzahl n₃ aufweist,
Erhitzen eines Anteils des Ziehformlings auf die Ziehtemperatur und
Ziehen einer optischen Faser (15) aus dem erhitzten Anteil des Ziehformlings bei einer Rate dergestalt, dass der Glaskern und die niedrig viskose Glasschicht in Richtung der Öffnungen fließen und sich die Öffnungen zur Bildung eines Kerns (21) mit einem elliptischen Querschnitt schließen, worin die niedrig viskose Glasschicht (23) einen Hauptachsenradius b₂, einen Nebenachsenradius a₂ und ein Aspektverhältnis b₁/a₂ aufweist und der Kern (21) einen Hauptachsenradius b₁, einen Nebenachsenradius a₁ und ein Aspektverhältnis b₁/a₁ aufweist, worin das Aspektverhältnis b₁/a₁ größer als das Aspektverhältnis b₂/a₂ ist.

2. Verfahren nach Anspruch 1, worin - vor dem Schritt des Erhitzens eines Anteils des Ziehformlings - die Mantelglasschicht (12) durch Zusammenschmelzen einer inneren Silica-Mantelschicht (42), die um die niedrig viskose Glasschicht (43) angeordnet ist und die ein Paar Längsnuten (44) aufweist, die entlang den diametral gegenüberliegenden Seiten der inneren Silica-Mantelschicht (42) verlaufen, eines Silica-Mantelrohrs (47), das um die Silica-Mantelschicht (42) angeordnet ist, und einer äußeren Silica-Mantelschicht (48), die um das Rohr (47) herum angeordnet ist, gebildet wird, worin die innere Silica-Mantelschicht (42) und das Silica-Mantelrohr (47) die beiden Öffnungen (13) um die Nuten (44) herum bilden.

3. Verfahren nach einem der vorangehenden Ansprüche, worin die beiden Öffnungen (13) in der niedrig viskosen Glasschicht (14) verlaufen.

4. Verfahren nach einem der vorangehenden Ansprüche, worin die niedrig viskose Glasschicht (14, 43) den Glaskern (11, 41) vollkommen umgibt.

5. Verfahren nach einem der vorangehenden Ansprüche, worin die niedrig viskose Glasschicht (14, 43) aus SiO₂ enthaltenden Dotiermitteln, die aus der Gruppe ausgewählt sind, bestehend aus B₂O₃, Fluor, P₂O₅ und GeO₂, gebildet ist.

6. Verfahren nach einem der vorangehenden Ansprüche, worin die Mantelglasregion (12, 42) aus SiO₂ besteht.

7. Verfahren zur Herstellung eines Formlings zum Ziehen einer optischen Faser, umfassend die Schritte von:
Bilden eines Vorformlings, umfassend:
Ein zentrales Kernglas (41) mit einer Viskosität bei einer Ziehtemperatur und
eine niedrig viskose Glasschicht (43), die den Kern (41) umgibt, wobei die niedrig viskose Glasschicht (43) eine Viskosität bei der Ziehtemperatur aufweist, die nicht größer als die Viskosität des Kernglases (41) bei der Ziehtemperatur ist;
Aufbringen einer inneren Silica-Mantelschicht (42) um den Vorformling herum;
Bilden von einem Paar Längsnuten (44), die entlang diametral gegenüberliegenden Seiten der inneren Silica-Mantelschicht (42) verlaufen;
Umgeben der inneren Silica-Mantelschicht (42) mit einem Glasrohr (47);
Aufbringen einer äußeren Silica-Mantelschicht (48) um das Glasrohr (47) herum in der Form von Silica-Rußpartikeln, worin der Vorformling, die innere Silica-Mantelschicht, das Glasrohr und die äußere Silica-Mantelschicht einen Zusammenbau (52) bilden; und
ausreichendes Erhitzen des Zusammenbaus (52) zur Konsolidierung der Silica-Rußpartikel und zum Zusammenschmelzen der inneren Silica-Mantelschicht (42), des Glasrohrs (47) und der äußeren Mantelschicht (48) zur Bildung einer Mantelschicht (12) wodurch ein Formling (10) zum Ziehen einer optischen Faser gebildet wird.

8. Verfahren zur Herstellung einer optischen Faser, das die Herstellung eines Ziehformlings mittels des Verfahrens nach Anspruch 7, Erhitzen eines Anteils des Formlings (10) zum Ziehen einer optischen Faser auf die Ziehtemperatur und Ziehen am erhitzten Anteil des Formlings zum Ziehen einer optischen Faser zum Bilden einer optischen Faser (15) umfasst.

## Revendications

1. Un procédé de formation d'une fibre optique comprenant les opérations consistant :
à former une ébauche d'étirage de fibre optique (10) comportant un coeur en verre (11, 41) d'indice de réfraction n₁ entouré par une couche de verre de gainage (12, 42) d'indice de réfraction n₂, l'ébauche présentant deux ouvertures (13) diamétralement opposées par rapport au coeur et espacées du coeur, les ouvertures s'étendant longitudinalement à travers l'ébauche et parallèlement au coeur, le coeur en verre ayant une viscosité à une température d'étirage et la couche de verre de gainage ayant une viscosité à la température d'étirage supérieure à la viscosité du coeur en verre à la température d'étirage, et l'ébauche d'étirage comportant une couche de verre de faible viscosité (14, 43) entre le coeur et les ouvertures, la couche de verre de faible viscosité ayant une viscosité à la température d'étirage non supérieure à la viscosité du coeur en verre, et la couche de verre de faible viscosité ayant un indice de réfraction n₃,
à chauffer une portion de l'ébauche d'étirage à la température d'étirage, et
à étirer une fibre optique (15) à partir de la portion chauffée de l'ébauche d'étirage à une allure telle que le coeur en verre et la couche de verre de faible viscosité s'écoulent vers les ouvertures et que les ouvertures se ferment pour former un coeur (21) présentant une section transversale elliptique dans laquelle la couche de verre de faible viscosité (23) présente un rayon de grand axe b₂, un rayon de petit axe a₂ et une excentricité b₂/a₂ tandis que le coeur (21) présente un rayon de grand axe b₁, un rayon de petit axe a₁ et une excentricité b₁/a₁, l'excentricité b₁/a₁ étant supérieure à l'excentricité b₂/a₂.

2. Un procédé selon la revendication 1, dans lequel, avant l'opération de chauffage d'une portion de l'ébauche d'étirage, la couche de verre de gainage (12) est formée en faisant fusionner ensemble une couche de gainage de silice intérieure (42) disposée autour de la couche de verre de faible viscosité (43) et comportant une paire de gorges longitudinales (44) s'étendant le long de flancs diamétralement opposés de la couche de gainage de silice intérieure (42), un tube de gainage de silice (47) disposé autour de la couche de gainage de silice (42), et une couche de gainage de silice extérieure (48) disposée autour du tube (47), la couche de gainage de silice intérieure (42) et le tube de gainage de silice (47) formant les deux ouvertures (13) au voisinage des gorges (44).

3. Un procédé selon l'une ou l'autre des revendications précédentes, dans lequel les deux ouvertures (13) s'étendent dans la couche de verre de faible viscosité (14).

4. Un procédé selon l'une quelconque des revendications précédentes, dans lequel la couche de verre de faible viscosité (14, 43) entoure complètement le coeur en verre (11, 41).

5. Un procédé selon l'une quelconque des revendications précédentes, dans lequel la couche de verre de faible viscosité (14, 43) est formée de silice renfermant des agents dopants choisis dans le groupe formé par B₂O₃, le fluor, P₂O₅ et GeO₂.

6. Un procédé selon l'une quelconque des revendications précédentes, dans lequel la région de verre de gainage (12, 42) est constituée de silice.

7. Un procédé de formation d'une ébauche d'étirage de fibre optique comprenant les opérations consistant :
à former une préforme comprenant :
un verre de coeur central (41) ayant une viscosité à une température d'étirage, et
une couche de verre de faible viscosité (43) entourant le coeur (41), la couche de verre de faible viscosité (43) ayant une viscosité à la température d'étirage non supérieure à la viscosité du verre de coeur (41) à la température d'étirage ;
à appliquer une couche de gainage de silice intérieure (42) autour de la préforme ;
à former une paire de gorges longitudinales (44) s'étendant le long de flancs diamétralement opposés de la couche de gainage de silice intérieure (42) ;
à entourer la couche de gainage de silice intérieure (42) d'un tube en verre (47) ;
à appliquer une couche de gainage de silice extérieure (48) autour du tube en verre (47) sous la forme de particules de suie de silice, la préforme, la couche de gainage de silice intérieure, le tube en verre et la couche de gainage de silice extérieure formant ainsi un ensemble (52) ; et
à chauffer l'ensemble (52) suffisamment pour consolider les particules de suie de silice et pour faire fusionner entre eux la couche de gainage de silice intérieure (42), le tube en verre (47) et la couche de gainage extérieure (48) pour former une couche de gainage (12), en formant ainsi une ébauche d'étirage de fibre optique (10).

8. Un procédé de formation d'une fibre optique qui comprend les opérations consistant à confectionner une ébauche d'étirage par le procédé de la revendication 7, à chauffer une portion de l'ébauche d'étirage de fibre optique (10) à la température d'étirage, et à tirer sur la portion chauffée de l'ébauche d'étirage de fibre optique pour former une fibre optique (15).
